# EUROPEAN PATENT APPLICATION

(11) **EP 1 160 643 A2**
(43) Date of publication of application: **05.12.2001**
(21) Application number: 00124083.7
(22) Date of filing: 06.11.2000
(51) Int. Cl.: G06F 1/00

(54) **Method of establishing a security policy, and apparatus for supporting establishment of security policy**

(30) Priority: 01.06.2000 JP 2000164819
(71) Applicant: Asgent, Inc., Tokyo 103-0016 (JP)
(72) Inventor: Sugimoto, Takahiro, Tokyo 103-0016 (JP)
(74) Representative: Leson, Thomas Johannes Alois, Dipl.-Ing.

(57) **Abstract**

There are provided a method of efficiently establishing a security policy and an apparatus for supporting establishment of a security policy. According to a method of establishing a security policy in six steps, a simple security policy draft is first prepared. The security policy draft is adjusted so as to match realities of an organization, as required, thus completing a security policy stepwise. Therefore, a security policy can be established in consideration of a schedule or budget of the organization.

## Description

### Background of the Invention

### Field of the Invention

The present invention relates to establishment of a so-called security policy. More particularly, the present invention relates to a method which enables immediate establishment of a security policy suitable for an individual organization, as well as to an apparatus for supporting establishment of a security policy.

### Background Art

In association with development of information technology, the importance of information security increases. Every organization takes various measures for protecting internal information.

For example, a firewall is set at an interface for establishing connection with an external network, thereby preventing unauthorized intrusion of the outsider into an internal network of the organization, or unauthorized access to internal information.

In order to combat computer viruses or the like, virus detection/combat software is employed for monitoring computers disposed in the organization. Throughout the specification, the expression "organization" signifies an enterprise, a federal or municipal agency, a corporation such as a legally-incorporated foundation, or any other party or organized group.

As mentioned above, various measures have hitherto been taken for ensuring information security.

If such measures are independently or separately discussed or reviewed, ensuring the security level of the entire organization becomes difficult.

For instance, no matter how well a firewall is enhanced, if third parties can freely enter the organization's building and have an opportunity to operate a terminal, the security level of the entire organization is considerably deteriorated.

Even if virus detection software is used, if updating of software for opposing new viruses is neglected, the software cannot combat newly created computer viruses.

In order to enhance the information security level of the entire organization, there must be devised a method for designing and implementing information security of the entire organization. Such a designing and implementation method (or a group of designing and implementation methods) is generally called a security policy.

Various proposals concerning basic headings and contents for establishing a standard security policy have already been put forward as international guidelines. As a matter of course, the headings and contents must be individually tailored to the organization.

Therefore, there still remains a necessity for establishing a security policy on a per-organization basis; security policies cannot be mass-produced. Thus, establishment of an individual security policy involves consumption of much time and effort.

Further, contents of a security policy must be changed with elapse of time. For instance, in a case where a corporate organizational structure has been changed, usage value and risk assessment of existing information must be changed correspondingly.

A common method concerning establishment of a security policy and making periodic amendments to the security policy has not been known. For this reason, individual systems engineer has had to establish or amend a security policy through experience and guess work. As a result, establishment of or making amendments to a security policy consumes an enormous amount of manpower. It is assumed that amendments may fail to catch up with a change in the actual circumstances (hereinafter called "reality") of an organization.

It has often been seen that a wide difference arises between a security policy and the reality of an organization, thereby imposing difficulty in establishing and sustaining enhanced information security.

The present invention has been conceived in light of the foregoing drawbacks of the background art and is aimed at providing a method of efficiently establishing a security policy, as well as an apparatus for supporting establishment of a security policy.

### Summary of the Invention

To this end, the present invention provides a method of establishing a security policy for a predetermined organization, the method comprising:
a draft preparation step of preparing a security policy draft;
an analysis step of examining a difference between the security policy draft and realities of the organization; and
an adjustment step of adjusting the security policy draft on the basis of the difference or adjusting operation rules of an actual information system belonging to the organization on the basis of the difference.

By means of such a configuration, a security policy can be established stepwise, thereby enabling efficient establishment of a security policy.

Preferably, the draft preparation step comprises:
a preparation step of preparing inquiries to be submitted to members of an organization;
an inquiry step of submitting the prepared inquiries to the members;
an answer acquisition step of acquiring from the members answers to the inquiries; and
a drafting step of preparing a security policy draft on the basis of the answers.

By means of such a configuration, a security policy draft can be prepared on the basis of inquiries.

Preferably, the preparation step involves preparation of inquiries on the basis of job specifications of members to be inquired.

Since inquiries are prepared according to a job specification of an member to be inquired, inquiries can be submitted efficiently.

Preferably, the answer acquisition step includes at least one of the steps of:
integrating the answers acquired from a single member from among the acquired answers and storing the integrated answers into storage means as answers of a single member to be inquired;
re-submitting inquiries to members if contradictory answers are included in the answers, to thereby resolve contradiction, and storing the answers into the storage means; and
assigning weights to answers according to job specifications of the members to be inquired if contradictory answers are included in the answers, to thereby determine answers and store the answers into the storage means.

Such a configuration enables integration of answers in a case where a plurality of inquirers separately submit inquiries to members to be inquired.

Preferably, the analysis step comprises at least one of:
a contradiction inspection step of inspecting whether or not contradictory answers are included in the answers;
a first difference detection step of inspecting a difference between an information system virtually designed on the basis of the answers and the security policy by means of comparison; and
a second difference detection step of verifying the virtually-designed information system by means of examination of a real information system and inspecting a difference between the verified information system and the security policy draft by means of comparison.

Such a configuration enables finding of contradiction between answers and detection of a difference between a real information system and a security policy.

Preferably, the method of establishing a security policy further comprises a measurement step of devising measures addressing the inspected difference, in conjunction with the priority of the measures.

Such a configuration enables devising of measures with assigned priorities.

Preferably, the method of establishing a security policy further comprises a diagnosis step of diagnosing the security state of the organization, wherein a result of diagnosis performed in the diagnosis step is submitted to the organization, wherewith the organization can become conscious of a necessity for a security policy.

Such a configuration enables ascertainment of security status of the organization.

Preferably, the method of establishing a security policy further comprises a priority planning step of planning, in sequence of priority, implementation with priority of the security measures which have been devised, thereby embodying a budget of the organization.

Such a configuration enables implementation of security measures in a premeditated manner, thereby facilitating preparation of a budget.

Preferably, the security measures comprise
introduction and testing of a security system;
training for compelling members respect a security policy;
analysis of system logs;
monitoring of a network;
auditing operations on the basis of the security policy; and
reviewing the security policy.

Since the security measures involve training of members as well as introduction of information security equipment, thereby enabling attainment of a higher degree of information security.

Preferably, the method of establishing a security policy further comprises a security enhancement measures implementation step of implementing the security measures in accordance with the plan.

Such a configuration enables smooth implementation of security measures.

The present invention also provides a method of establishing a security policy comprising:
a preparation step of preparing inquiries to be submitted to members of an organization;
an inquiry step of submitting the prepared inquiries to the members;
an answer acquisition step of acquiring from the members answers to the inquiries; and
an establishment step of establishing a security policy on the basis of the answers.

By means of such a configuration, a security policy draft can be prepared on the basis of inquiries.

Preferably, the preparation step involves preparation of inquiries on the basis of job specifications of members to be inquired.

Since inquiries are prepared according to a job specification of an member to be inquired, inquiries can be submitted efficiently.

Preferably, the answer acquisition step includes at least one of the steps of:
integrating the answers acquired from a single member from among the acquired answers and storing the integrated answers into storage means as answers of a single member to be inquired;
re-submitting inquiries to members if contradictory answers are included in the answers, to thereby resolve contradiction, and storing the answers into the storage means; and
assigning weights to answers according to job specifications of the members to be inquired if contradictory answers are included in the answers, to thereby determine answers and store the answers into the storage means.

Such a configuration enables integration of answers in a case where a plurality of inquirers separately submit inquiries to members to be inquired.

Preferably, the establishment step involves establishment of three types of security policies; namely,
an executive-level security policy which describes the organization's concept and policy concerning information security in conformity with global guidelines;
a corporate-level security policy which describes an information security system embodying the executive-level security policy; and
a product-level security policy which describes measures to implement the executive-level security policy with reference to the corporate-level security policy.

Since three types of security policies are established, a hierarchical security policy can be obtained. Here, the measures to implement the executive-level security policy with reference to the corporate-level security policy includes operation rules for utilizing the security policies, as well as hardware and software.

Preferably, the corporate-level security policy includes two types of corporate-level security policies; namely,
a top-level security policy describing standards for the information security system of the overall organization; and
a sub-level security policy describing standards for individual units constituting the information security system of the organization.

Such a configuration clarifies a security policy for the entire organization and a security policy for individual pieces of equipment. Here, equipment is a concept including networks, hosts, and applications.

Preferably, the product-level security policy includes two types of product-level policies; namely,
a first-level security policy described in natural language; and
a second-level security policy describing settings of individual devices constituting the information security system.

The first-level product-level security policy enables a human to understand a security policy. The second-level product-level security policy facilitates setting of individual equipment. Here, equipment includes both hardware and software constituting the information security system.

Preferably, the analysis step comprises
a contradiction inspection step of inspecting whether or not contradictory answers are included in the answers; and
a difference detection step of inspecting whether or there is a difference between an information system virtually designed on the basis of the answers and a real information system of the organization.

Such a configuration enables efficient detection of contradiction or difference.

Preferably, the method of establishing a security policy further comprises a measurement step of devising measures addressing the inspected difference, in conjunction with the priority of the measures.

Since measures are devised in conjunction with priorities thereof, planning for implementing information security is facilitated.

The present invention also provides an apparatus of establishing a security policy comprising:
inquiry preparation means of preparing inquiries to be submitted to members of an organization;
storage means for storing answers to the inquiries;
answer archival storage means for acquiring from the members the answers to the inquiries and storing the answers into the storage means; and
establishment means for establishing a security policy on the basis of the answers stored in the storage means.

Since inquiries to be submitted to members are prepared, inquiry operations are facilitated. Here, the expression "member" signifies any individual associated with an information system of the organization. Therefore, members include part-time employees and employees of affiliated corporations, as well as employees of an organization of interest.

Preferably, the inquiry preparation means prepares inquiries to be submitted to the members to be inquired, on the basis of job specifications of the members to be inquired.

Since inquiries are prepared according to a job specification of an member to be inquired, inquiries can be submitted efficiently.

Preferably, the answer archival storage means
integrates the answers acquired from a single member from among the acquired answers and stores the integrated answers into the storage means as answers of a single member to be inquired; or
re-submits inquiries to members if contradictory answers are included in the answers, to thereby resolve contradiction, and stores the answers into the storage means; or
assigns weights to answers according to job specifications of the members to be inquired if contradictory answers are included in the answers, to thereby determine answers, and stores the answers into the storage means.

Such a configuration enables integration of answers while ensuring a match among the answers in a case where a plurality of inquirers separately submit inquiries to members to be inquired.

Preferably, the establishment means establishes three types of security policies; namely,
an executive-level security policy which describes the organization's concept and policy concerning information security in conformity with global guidelines;
a corporate-level security policy which describes an information security system embodying the executive-level security policy; and
a product-level security policy which describes measures to implement the executive-level security policy with reference to the corporate-level security policy.

Since three types of security policies are established, a hierarchical security policy can be obtained. Here, the measures for implementing the executive-level security policy with reference to the corporate-level security policy include operation rules for utilizing the security policies, as well as hardware and software.

Preferably, the corporate-level security policy includes two types of corporate-level security policies; namely,
a top-level security policy describing standards for the information security system of the overall organization; and
a sub-level security policy describing standards for individual units constituting the information security system of the organization.

Such a configuration clarifies a security policy for the entire organization and a security policy for individual pieces of equipment. Here, equipment is a concept including networks, hosts, and applications.

Preferably, the product-level security policy includes two types of product-level policies; namely,
a first-level security policy described in natural language; and
a second-level security policy describing settings of individual devices constituting the information security system.

The first-level product-level security policy enables a human to understand a security policy. The second-level product-level security policy facilitates setting of individual equipment. Here, equipment includes both hardware and software constituting the information security system.

The present invention also provides a method of assessing the state of security of an organization, the method comprising:
an inquiry preparation step of preparing inquiries to be submitted to members of an organization;
an inquiry step of submitting the prepared inquiries to the members;
an answer acquisition step of acquiring from the members answers to the inquiries; and
a security state assessment step of assessing the state of security on the basis of the answers.

By means of such a configuration, the security state of an organization can be ascertained on the basis of answers to inquiries.

Preferably, the inquiry preparation step involves preparation of inquiries on the basis of job specifications of members to be inquired.

Since inquiries are prepared according to a job specification of an member to be inquired, inquiries can be submitted efficiently.

Preferably, the answer acquisition step involves integration of previous answers and acquired answers in a case where the answers are provided by a member to be inquired who has provided answers before, and involves storage of the integrated answers into storage means as answers from a single member to be inquired.

Such a configuration enables integration of answers while ensuring a match among the answers in a case where a plurality of inquirers submit separately inquiries to members to be inquired.

Preferably, the assessment of a security state includes
assessment of security of the organization;
assessment of security of the other organizations included in an industry to which the organization pertains; and
the highest security assessment which is considered to be attainable by organizations in the industry to which the organization pertains.

Such a configuration enables assessment of an organization in comparison with similar organizations. Further, display of a theoretical highest value facilitates setting of a goal to be attained.

Preferably, the assessment of a security state includes scores assigned to the following items; namely,
understanding and attitude concerning security;
a security system of the organization;
a response to unexpected accidents;
preparation of a budget for security; and
measures to improve security.

Such a configuration enables an organization to ascertain assessment of information security on a per-item basis.

The present invention also provides an apparatus for assessing the state of security of an organization, the apparatus comprising:
preparation means for preparing inquiries to be submitted to members of an organization;
storage means for storing answers to the inquiries;
answer archival storage means for acquiring the answers to the inquiries from the members and storing the answers into the storage means; and
security effectiveness preparation means for preparing a security effectiveness report representing the degree of completeness of security, on the basis of the answers stored in the storage means.

Inquiries are submitted to members, and an organization can ascertain its security on the basis of answers to the inquiries.

Preferably, the preparation means prepares inquiries to be submitted to the members to be inquired, on the basis of job specifications of the members to be inquired.

Since inquiries are prepared according to a job specification of an member to be inquired, inquiries can be submitted efficiently.

Preferably, the answer archival storage means integrates previous answers and acquired answers in a case where the answers are provided by an member to be inquired who has provided answers before, and stores the integrated answers into the storage means as answers from a single member to be inquired.

Such a configuration enables integration of answers while ensuring a match among the answers in a case where a plurality of inquirers submit separately inquiries to members to be inquired.

Preferably, the security effectiveness report includes
the degree of completeness of the organizations security;
the degree of completeness of security of other organizations included in an industry to which the organization pertains; and
the highest degree of completeness of security which is considered to be attainable by organizations in the industry to which the organization pertains.

Such a configuration enables assessment of an organization in comparison with other organizations. Further, display of a theoretical highest value facilitates setting of a goal to be attained.

Preferably, the security effectiveness report includes scores assigned to the following items; namely,
understanding and attitude concerning security;
a security system of the organization;
response to unexpected accidents;
preparation of a budget for security; and
measures to improve security.

Such a configuration enables an organization to ascertain assessment of information security on a per-item basis.

The present invention also provides an analyzer for analyzing a difference between a security policy and an information system of an organization, comprising
contradiction inspection means for inspecting whether or not contradiction exists between individual answers in response to inquiries submitted to members of the organization; and
contradiction output means for outputting information about the inspected contradiction.

Such a configuration enables ascertainment of contradiction included in answers.

Preferably, the analyzer for analyzing a difference between a security policy and an information system of an organization further comprises
matching means for matching the answers by means of elimination of contradiction on the basis of the information about contradiction, thus producing answers free of contradiction;
establishment means for virtually establishing an information system for the organization on the basis of the answers produced by the matching means; and
difference output means for outputting a difference between the configuration of the virtually-established information system and a security policy, by means of comparison.

Such a configuration enables ascertainment of a difference between a security policy and realities of an organization.

Preferably, the analyzer for analyzing a difference between a security policy and an information system of an organization further comprises
real system input means for examining the information system of the organization and entering the configuration of the information system; and
difference output means which verifies the virtually-established information system by reference to the configuration of the information system and outputs a difference between a security policy and the configuration of the virtually-established information system which has been verified, by means of comparison.
Such a configuration enables comparison between an information system which has been verified by means of actual examination of an information system and a security policy, thereby enabling accurate analysis of a difference.

### Brief Description of the Drawings

FIG. 1 is a flowchart representing the principle of a business model according to a preferred embodiment of the present invention;
FIG. 2 is a block diagram showing the configuration of an appraisal device;
FIG. 3 is a flowchart representing preparation of an appraisal report;
FIG. 4 is a block diagram showing the configuration of an apparatus for preparing a security policy draft;
FIG. 5 is a flowchart showing establishment of a security policy draft through use of a security policy draft establishment apparatus;
FIG. 6 is a listing of types representing job specifications;
FIG. 7 is a block diagram showing the configuration of an analyzer; and
FIG. 8 is a flowchart showing operations pertaining to inspection and analysis of a system operation.

### Detailed Description of the Preferred Embodiment

A preferred embodiment of the present invention will now be described hereinbelow by reference to the accompanying drawings.

There will be described a business model concerning a round of operations from establishment of a security policy of_a certain organization to maintenance of the security policy. Preferably, the business model is generally implemented by a system engineer through use of a predetermined expert system.

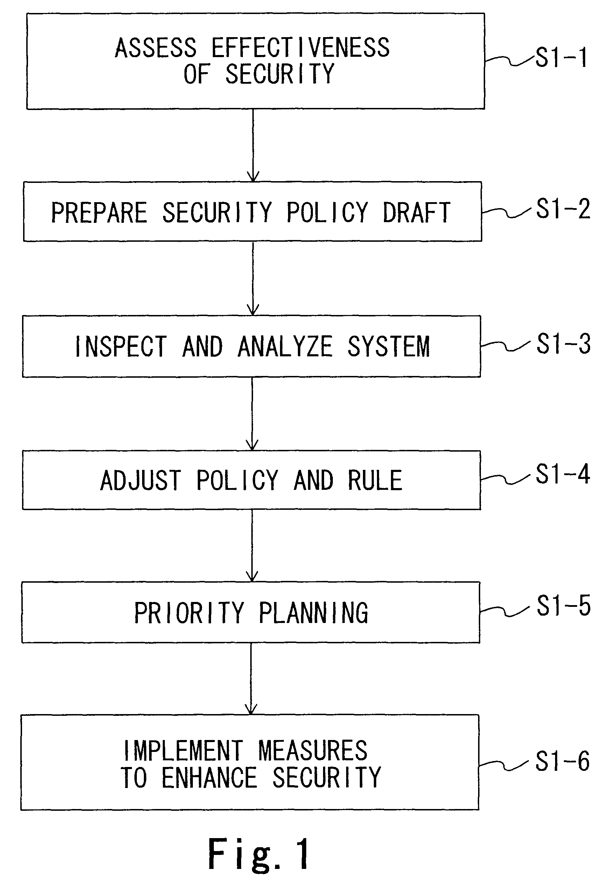

The principle of the business model according to the present embodiment will first be described. FIG. 1 shows a flowchart representing the principle of such a business model. As illustrated by the drawing, the business model according to the present invention is basically made up of the following six steps.
Step 1: Assessment of security effectiveness
Step 2: Preparation of a security policy draft
Step 3: System, and inspection and analysis of the system
Step 4: Coordination between a policy and rules
Step 5: Priority Planning
Step 6: Implementation of measures to enhance security.

According to the security establishment method consisting of six steps, an interview-based security policy draft is first established. If necessary, the security policy draft is re-adjusted so as to reflect the reality of an organization. Since the security policy is completed stepwise, the security policy can be established in accordance with the schedule or budget of an organization.

Step 1 is for evaluating the current state of information security of an organization. Through assessment of information security, the organization can ascertain the current state of its information security.

Step 2 is for preparing an elementary security policy draft by means of submitting inquiries to members of the organization. The security policy draft is prepared by means of simple interview, and hence a security policy can be prepared at relatively low cost.

Step 3 is for reviewing a difference between the security policy draft and the reality of the organization. Since the security policy draft is prepared on the basis of mere answers to the inquiries, a difference may arise between the security policy draft and the reality of the organization.

Step 4 is for adjusting, in accordance with a difference, a security policy or rules about security products which have already been introduced.

Step 5 is for establishing a future information security plan, taking into consideration precedence in adopting means or measures.

Step 6 is for performing required security protection measures according to the information security plan.

Since the security policy is established stepwise as mentioned above, a security policy can be established in accordance with realities of each organization; that is, the budget or concept of each organization.

For instance, a security policy draft may be sufficient for a small-scale organization. Priority planning makes a future plan specific, and hence there will be yielded an advantage of easy development of a budget for the organization.

The dominant steps of the business model according to the present embodiment reside particularly in steps 2 through 4. In step 2, an elementary security policy draft is prepared. In step 3, a difference between the security policy draft and the realities of an organization is analyzed. In step 4, a security policy or rules for security products which have already been introduced are adjusted. So long as a business model includes at least steps 2 through 4, the business model enables systematic establishment of a security policy. Such a business model enables an increase in productivity and quality relative to a conventional method based on experience and intuition.

In order to implement such stepwise establishment of a security policy, various expert systems are used in the present embodiment.

Steps 1 through 6 will now be described individually, including a method of using expert systems.

### A. Step 1 : Assessment of security effectiveness

In this step, effectiveness of current information security of an organization is objectively assessed. Through such an appraisal, the organization can be rated in terms of security. More specifically, assessment of information security is performed by means of preparing the security effectiveness appraisal report.

In the present embodiment, security effectiveness is assessed on the basis of a Software Capability Maturity Model developed by Carnegie Mellon University in the U.S. According to this model, security effectiveness is quantitatively assessed with regard to five headings. In other words, scores are assigned for each of the five headings.

The five headings are as follows:
a: Comprehension and posture of an administrator regarding information security
b: Security status of an organization
c: Response to an unexpected disaster
d: Budgeting for security
e: Measures to improve security

Here, an unexpected disaster mean an event which threatens information security; for example, a wiretapping activity or faulty operation of equipment. Entry "c"; i.e., response to unexpected disaster, represents whether or not the organization can address unexpected disaster. Entry "d"; i.e., budgeting for security, represents whether or not a sufficient budget is ensured for information security. Entry "e"; i.e., measures to improve security, represents the extent to which a schedule or plan for security improvement is made.

In the present embodiment, an effectiveness assessment report is prepared with regard to the above-described five headings, and includes scores. By means of such a report, the current security status of an organization can be ascertained.

A specific method of preparing the security effectiveness assessment report will now be described.

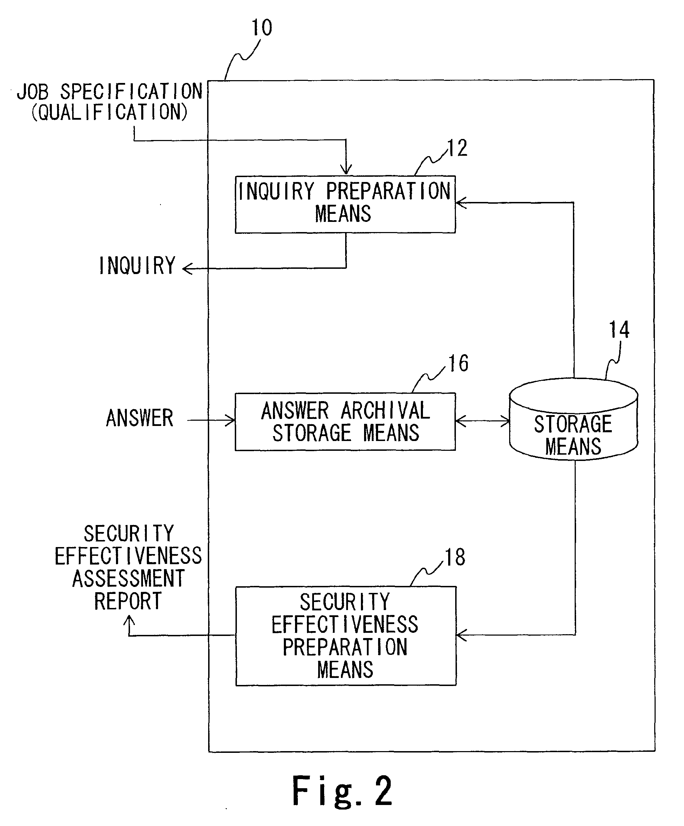

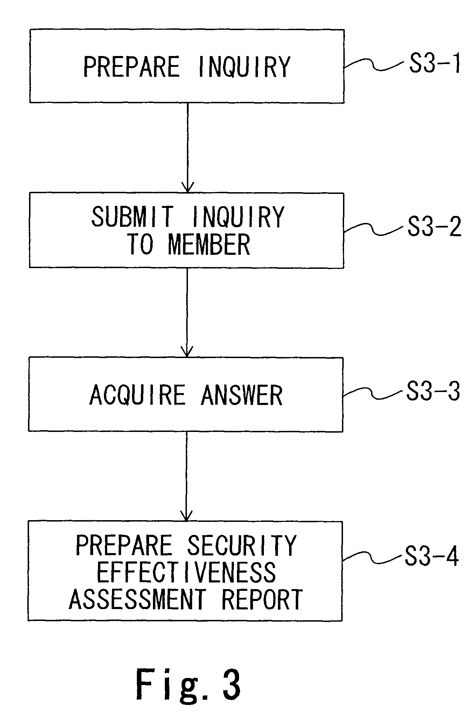

In the present embodiment, inquiries are submitted to the organization's members, and an effectiveness assessment report is prepared on the basis of answers to the inquiries. More specifically, an appraisal device 10 shown in FIG. 2 performs preparation of inquiries, collection of answers, and preparation of the security effectiveness assessment report. FIG. 3 shows a flowchart representing operations for preparing the security effectiveness assessment report. The flowchart shown in FIG. 3 shows, in more detail, processing pertaining to step S1-1 shown in FIG. 1.

As shown in FIG. 2, the appraisal device 10 has inquiry preparation means 12 for preparing inquiries to be submitted to an employee to be inquired, on the basis of his job specifications. For instance, submitting an inquiry about a virus inspection program to the CEO is rather meaningless. Further, if an inquiry about a budget for information security is submitted to a member who has recently joined the organization, acquisition of a meaningful answer is unlikely.

For these reasons, the inquiry preparation means 12 extracts from storage means 14 inquiries to be submitted, in accordance with job specifications of the member to be inquired. A variety of inquiries are stored beforehand in the storage means 14, and the inquiry preparation means 12 extracts inquiries required for a member to be inquired.

The present embodiment is characterized in that inquiries are changed in accordance with job specifications of an individual member. As a result, preparation of inquiries suitable for a member to be inquired becomes feasible.

In more detail, a so-called course of inquiries is determined in accordance with job specifications of a member. Inquiries to be submitted in each course are changed in response to an answer submitted by a member. For example, if in response to an inquiry about use of VPN a member has answered that VPN is not used, detailed inquiries about VPN are skipped. In contrast, if the member has answered that VPN is used, detailed inquiries about VPN are submitted to the member.

Such a control operation is implemented by utilization of, a so-called knowledge-based expert system.

The appraisal device 10 has answer archival storage means 16. Answers submitted by members in response to inquiries which have been prepared in the manner as mentioned above are supplied to the answer archival storage means 16. The answer archival storage means 16 preserves answers in the storage means 14.

The present embodiment is also characterized in that the answer archival storage means 16 has an answer integration function. In a case where inquiries are submitted by a plurality of systems engineers, answers to the inquiries are collectively stored in the storage means 14 according to the answer integration function. In a case where a large number of members are to be inquired, answers can be immediately acquired by means of a plurality of systems engineers sharing the load of submitting inquiries to the members through interview. In such a case, the resultant answers are accumulated in a plurality of computers. Therefore, these answers must be integrated into a single database.

As a matter of course, the answer integration function can be utilized for integrating answers submitted by a single member to be inquired as a result of inquiries having been submitted to the member and answers having been acquired from the member on several occasions, for reasons that submitting inquiries to the member and receiving answers to the inquires from the member could not be performed on a single occasion.

The appraisal device 10 has security effectiveness preparation means 18, which prepares the security effectiveness report, or an assessment report about information security of an organization, on the basis of the group of answers stored in the storage means 14.

This appraisal device 10 is a so-called expert system.

As mentioned above, particularly in the present embodiment, inquiries are changed according to job specifications, and there is also employed the appraisal device 10 having the function of integrating collected answers. Consequently, the security effectiveness assessment report can be prepared efficiently and precisely.

By reference to the flowchart shown in FIG. 3, there will be described an operation for preparing the security effectiveness assessment report.

In step S3-1, job specifications of a member who is an member to be inquired are supplied to the inquiry preparation means 12, and inquiries to be submitted to the member are prepared.

In step S3-2, a systems engineer submits the thus-prepared inquiries to the member.

In step S3-3, answers to the inquiries are acquired from the member and delivered to the answer archival storage means 16 of the appraisal device 10. As set forth, the answer archival storage means 16 has the answer integration function and sends the answers to the storage means 14 after having integrated them into a single database. The group of answers acquired by a plurality of systems engineers are integrated into a single database by means of the answer integration function, and the single set of data can be stored in the storage means 14.

### Integration Function

An integration function includes the following features:
(1) A plurality of systems engineers separately conduct interviews with individual members and collect the resultant answers. For instance, if a plurality of systems engineers conduct an interview with a single member, the resultant answers are integrated into a single database. More specifically, a series of inquiries of the same type are submitted to a plurality of members, and the resultant answers are integrated into a single database.
(2) There may be a case where a single inquiry is submitted to different members through interviews. In such a case, a contradiction may arise in answers. There are two measures to eliminate the contradiction. A first measure is a re-interview. In the event that respondents have submitted incorrect answers with regard to the contradiction, it is thought that such a contradiction can be resolved by means of conducting a re-interview or inspection (or both) . A second measure is to determine answers by means of assigning weights to answers in accordance with the types (job specifications) of the members.

In the present embodiment, the user can freely select either the first measure or the second measure. If there is a time to conducting a re-interview, the first method is preferable. In contrast, if too many members are to be interviewed, the second measure is preferable.

In step S3-4, the security effectiveness report preparation means 18 prepares the security effectiveness assessment report including scores assigned to five respective headings, on the basis of the group of answers stored in the storage means 14.

As mentioned above, the security effectiveness assessment report is prepared through use of the appraisal device 10.

### Comparison between Industry Standard and Scores Described in Security Effectiveness Assessment Report

As mentioned previously, scores (points) are assigned to five respective headings described in the security effectiveness assessment report.

The present embodiment is characterized particularly in that an average of scores assigned to all the organizations and the highest score in an industry to which the organization pertains are displayed along with a score assigned to the security effectiveness assessment report. Here, the expression "highest score" is the top score (a theoretical value) which can be attained by any organization belonging to the industry.

As a result, the ranking of efforts made by the organization for ensuring information security in the industry can be readily ascertained. Such a mean value and the maximum value in an individual industry are stored in the storage means 14 beforehand. Further, an average value is updated every time assessment of security effectiveness is performed, to thereby calculate scores to be assigned to a certain organization.

### Consideration of Geographical Factor

In the present embodiment, inquiries which take into consideration geographical factors are also included; for example, an inquiry as to whether the dominant market for products is domestic or oversea or an inquiry about the nationality of a dominant business partner. By means of such inquiries, effectiveness of information security can be assessed in consideration of a geographical factor; that is, a security difference between regions.

### Report on the Progress of Implementation of Security Measures

In the present embodiment, the security effectiveness assessment report is prepared to the effect that the status of information security of an organization is investigated prior to establishment of a security policy. However, so long as the security effectiveness report is prepared during the course of sequential implementation of measures for information security, the progress of implementing measures for information security can be ascertained. Accordingly, a step of preparing the security effectiveness report also serves as a step of reporting the progress of implementation of security.

In the appraisal device 10 according to the present embodiment, all the inquiries and corresponding answers are stored in the storage means 14. However, it may be the case that inquiries are stored in one storage means and answers are stored in another storage means.

### B. Step 2: Preparation of Security Policy Draft

In this step, a simple security policy draft of an organization is prepared. The draft corresponds to a security policy based on answers are submitted by members of the organization in response to inquiries. Since an actual information system of the organization has not yet been investigated, a security policy cannot be established immediately.

Various basic headings and contents used for establishing a standard security policy have already been known as international guidelines. These guidelines are hereinafter called global guidelines. In the present embodiment, a security policy draft is prepared by means of extracting principles from the global guidelines and combining the thus-extracted principles, as required.

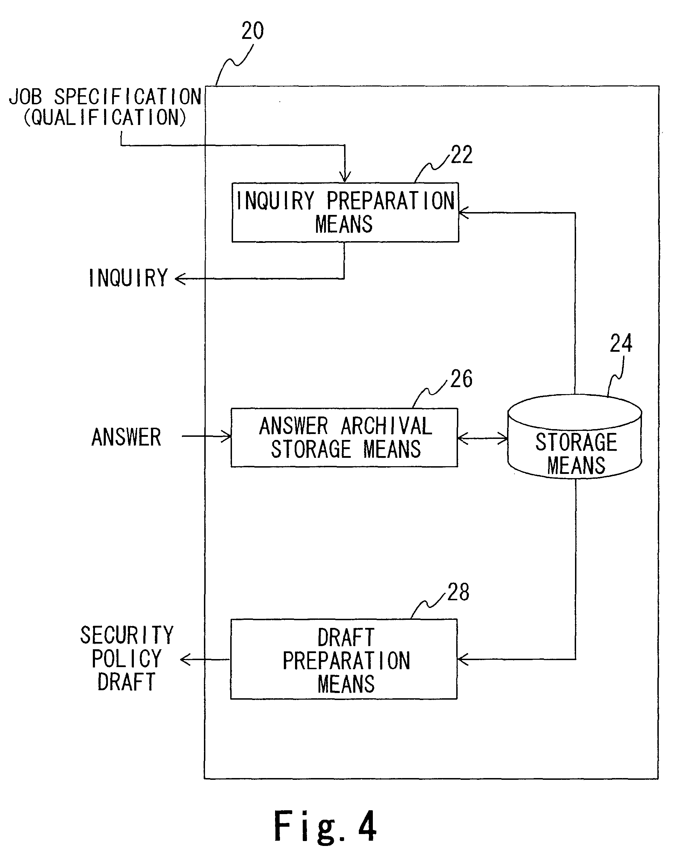

In the present embodiment, a security policy draft preparation device 20 is used for preparing a security policy draft. FIG. 4 is a block diagram showing the configuration of the security policy draft preparation device 20.

As shown in FIG. 4, the security policy draft preparation device 20 has inquiry preparation means 22 for preparing inquiries to be submitted to an member to be inquired, in accordance with job specifications of the member to be inquired. Inquiries are changed in accordance with job specifications of a member to be inquired for acquiring useful answers, as determined by the inquiry preparation means 12 of the appraisal device 10.

A variety of inquiries are stored beforehand in storage means 24 provided in the security policy draft preparation device 20, as in the case of the storage means 14 shown in FIG. 2 . The inquiry preparation means 22 extracts appropriate inquiries from the storage means 24 in accordance with job specifications of a member.

The security policy draft preparation device 20 is further equipped with answer archival storage means 26. The answer archival storage means 26 stores answers into the storage means 24, as does the answer archival storage means 16. Further, the answer archival storage means 26 has an answer integration function, as does the answer archival storage means 16.

The security policy draft preparation device 20 has draft preparation means 28 for preparing a security policy draft. The draft preparation means 28 prepares a security policy on the basis of the group of answers stored in the storage means 24.

The security policy draft preparation device 20 is a so-called expert system, as is the appraisal device 10. In fact, the previously-described individual means are preferably embodied as software which is executed on a computer.

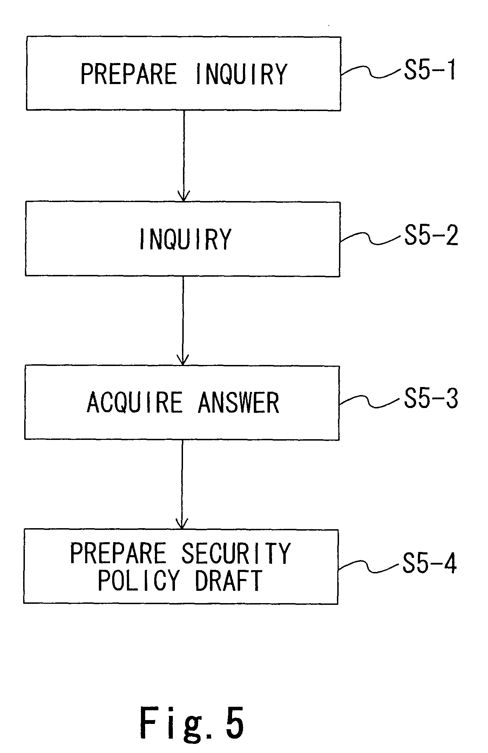

By reference to a flowchart shown in FIG. 5, there will be described an operation for preparing a security policy draft. FIG. 5 shows a flowchart representing an operation for preparing a security policy draft through use of the security policy draft preparation device 20.

In step S5-1, job specifications of members who are to be inquired are supplied to the inquiry preparation means 22, and inquiries are submitted to the members.

As set forth, in the present embodiment, inquiries to be prepared are determined in accordance with job specifications of the members. Consequently, appropriate inquiries to be submitted to members to be inquired can be prepared.

A so-called course of inquiries is determined in accordance with job specifications of a member. Actual inquiries to be submitted in each course are changed in response to an answer submitted by a member. For example, if in response to an inquiry about use of VPN a member has answered that VPN is not used, detailed inquiries about VPN are skipped. In contrast, if the member has answered that VPN is used, detailed inquiries about VPN are submitted to the member.

Such a control operation is implemented by utilization of, a so-called knowledge-based expert system.

In step S5-2, the thus-prepared inquiries are submitted to members.

In step S5-3, answers to the inquiries are submitted by the members, and the answers are entered to the answer archival storage means 26 of the security policy draft preparation device 20. Preferably, the answers are entered by system engineers. As a matter of course, there may be employed a form in which individual members answer inquiries by way of a screen of the policy draft preparation device 20. The answer archival storage means 26 has an answer integration function, as mentioned above, and integrates answers acquired by a plurality of system engineers into a single database and stores the single database into the storage means 24.

In step S5-4, on the basis of the group of answers stored in the storage means 24, the draft preparation means 28 prepares a security policy draft by combination of various principles extracted from the global guidelines.

As set forth, a security policy draft is prepared through use of the security policy draft preparation device 20.

In the present embodiment, there are prepared three types of (drafts of) security policy: that is, an executive-level security policy (draft), a corporate-level security policy (draft), and a product-level security policy (draft). These three types of security policy drafts will be described later in section B-5.

### B-1: Inquiries (for an interview)

Inquiries (often called an "interview") will be described hereinbelow.

Headings of an interview are as follows:
1. Enterprise
2. Network
3. Server and host
4. Application and database
5. Security items of great importance
6. Items to be corrected

Individual headings will now be described.

### (1) Enterprise

In connection with heading "enterprise," an interview is conducted for the outline and system of an "enterprise, " which is one typical type of organization. From answers to the inquiries, there can be derived an information security administration system, policy principles, and analysis of weaknesses.

Heading "enterprise" is followed by the following sub-headings.
1.1 Management system
1.2 Employees
1.3 Outline of enterprise
1.4 Venders
1.5 Clients
1.6 Consultants
1.7 Outsourcing
1.8 Application
1.9 Network
1.10 Security profile
1.11 Business category
1.12 Organization policy

Inquiry headings may change according to job specifications. For instance, inquiry heading "host" is not provided for a chief executive officer. Thus, the present embodiment is characterized in that inquiries change according to job specifications. Thus, inquiries tailored to job specifications can be submitted to a member, thus enabling efficient conduct of an interview.

### (2) Network

In connection with heading "network," inquiries about the outline, operation, and settings of a network are submitted through an interview. From answers to these inquiries, there can be derived the weaknesses of the network, a corporate-level policy pertaining to the network, or the like.

The majority of a group of inquiries about heading "network" exert an influence on a corporate-level policy. However, some of the inquiries may affect a product-level policy.

Heading "network" is followed by the following sub-headings.
2.1 Operation environment
2.2 Network properties
2.3 Authentication and identification
2.4 Audit and logs
2.5 Access control
2.6 Modification procedures
2.7 Disaster recovery
2.8 Operation reliability
2.9 Physical security
2.10 Modem
2.11 Workstation security

### (3) Server and host

In connection with heading "server and host," inquiries about the outline, operation, and settings of a host are submitted through an interview. From answers to the inquiries, there are derived the weakness of a host and a corporate-level policy pertaining to a host and a server.

The majority of inquiries about heading "server and host" exert an influence on a corporate-level policy, and some of the inquiries may affect a product-level policy.

Heading "server and host" is followed by the following sub-headings.
3.1 Properties of server and host
3.2 Authentication and identification
3.3 Audit and logs
3.4 Access control
3.5 Modification procedures
3.6 Disaster recovery and back-up
3.7 Operation reliability
3.8 Physical security

### (4) Application and database

In connection with heading "application and database," inquiries about the outline, operation, and settings of an application are submitted through an interview. From answers to the inquiries, there are derived the weaknesses of an application and a corporate-level policy pertaining to an application. The majority of inquiries about heading "application and database" exert an influence on a corporate-level policy, and some of the inquiries may affect a product-level policy.

Heading "application and database" is followed by the following sub-headings.
4.1 Properties of application and database
4.2 Authentication and identification
4.3 Audit and logs
4.4 Access control
4.5 Modification procedures
4.6 Disaster recovery and back-up
4.7 Operation reliability
4.8 Physical security

### (5) Security items of great importance

In connection with heading "security items of great importance," inquiries about information usually required for establishing a firewall are submitted through an interview. From answers to the inquiries, there are derived a corporate-level policy and a product-level policy. The majority of inquiries about heading "security items of great importance" exert an influence on a corporate-level policy and a product-level policy, and some of the inquiries may affect an executive-level policy.

Heading "security items of great importance" is followed by the following sub-headings.
5.1 Management of firewall
5.2 Packet filtering
5.3 NAT (network address transfer)
5.4 SMTP content filtering
5.5 FTP content filtering
5.6 HTTP content filtering
5.7 Logs and alert

### (6) Items to be corrected

In connection with heading "items to be corrected," inquiries about information usually required for establishing VPN are submitted through an interview. From answers to the inquiries, there are derived a corporate-level policy and a product-level policy.

Heading "items to be corrected" is followed by the following sub-headings.
6.1 VPN properties
6.2 VPN management
6.3 Key delivery
6.4 Logs and audit

### B-2 Interview style

Contents of an interview are as set forth, and the interview is conducted in any of various forms, such as a description form or a multiple-choice.

### B-3 Interviewee

The security policy draft preparation device 20 according to the present embodiment changes inquiries according to a member who is an interviewee. In short, inquiries are controlled according to job specifications of an interviewee.

Consequently, appropriate inquiries to be submitted to an interviewee can be prepared.

In more detail, a so-called course of inquiries is determined in accordance with job specifications of a member. Inquiries to be submitted in each course are changed in response to an answer submitted by a member. For example, if in response to an inquiry about use of VPN a member has answered that VPN is not used, detailed inquiries about VPN are skipped. In contrast, if the member has answered that VPN is used, detailed inquiries about VPN are submitted to the member.

Such a control operation is implemented by utilization of a so-called knowledge-based expert system.

Prior to conduct of an actual interview, job specifications of an interviewee must be entered into the security policy preparation device 20. More specifically, data pertaining to the following entries are input.
* Name
* Department (division?)
* Title
Postal Code
Address
Country
Phone Number
E-mail Address
*Type

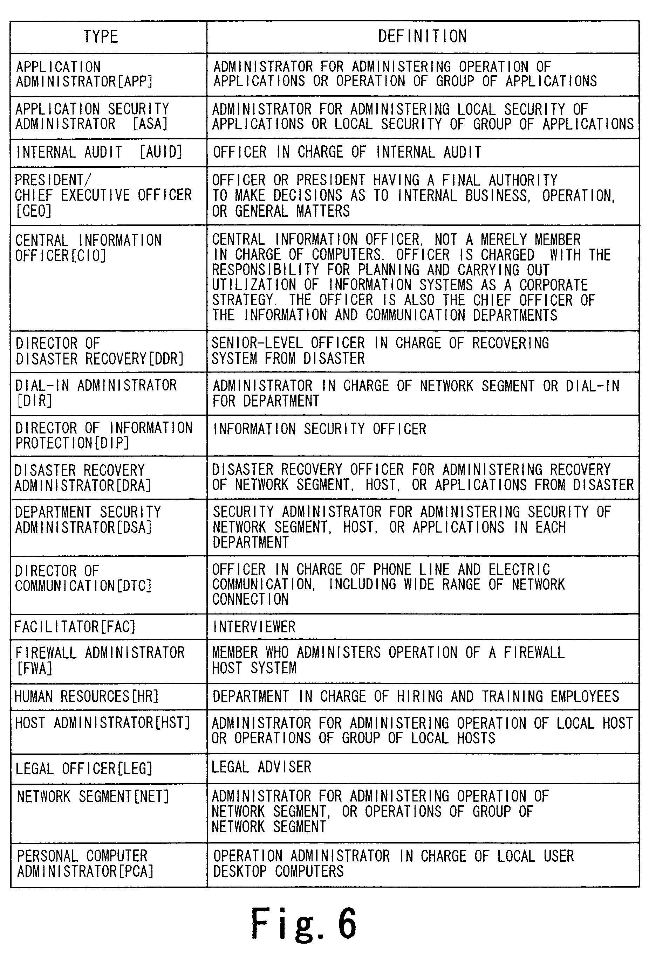

Of these entries, entries prefixed by asterisks are required entries. Here, the expression "type" denotes a symbol representing a job specification. In the present embodiment, symbols shown in FIG. 6 are used for expressing a job specification. Simply put, the "type" denotes a job specification. Inquiries to be submitted are determined on the basis of a type. A listing of types to be handled in the present embodiment is shown in FIG. 6.

Inquiries which are actually submitted to an interviewee change according to answers. Such control of inquiries is performed on the basis of a knowledge-based operation. For instance, an inquiry about an "expiration date of a password" is not submitted to members who have answered that no expiration is imposed on a password in response to an inquiry as to whether or not an expiration data is set for a password. In contrast, an inquiry about an expiration date of a password may be submitted to members who have answered that an expiration date is set for a password.

### B-4 Information Assets to be managed

In the present embodiment, information assets for, which security must be ensured are classified into five categories; namely, network, host, application, user group, and others. In a case where information assets are entered into the security policy draft preparation device 20 according to the present embodiment, data pertaining to the following four entries are to be input. Here, in a case where information assets belong to either category "host" or category "network," data pertaining to two additional entries; i.e., "IP address" and "sub-net mask," are to be entered.
Asset ID
*Asset type
*Name of asset
Details
Of these entries, entry "asset type" covers five types.
A application
H Host
N Network
U User group
W Others, including URL, domain names, and file names

The expression "user group" designates a logical set of users possessing a common characteristic. For example, users who handle, amend, analyze, and report accounting information are collectively called a "accounting group." Each user group is formed from one user or two or more users. The word "user" designates a human who uses information assets.

### B-5 Preparation of Security Policy Draft

A security policy is established by means of entering into the security policy draft preparation device 20 answers to the foregoing inquiries. This device is a so-called expert system. By means of entry of answers to inquiries into a system, the system produces and outputs a security policy. Such a device which produces data of some kind in response to entry of answers to inquiries has already been known as an expert system, and hence its detailed explanation is omitted.

In the present embodiment, three types of security policies are produced; i.e., an executive-level security policy, a corporate-level security policy, and a product-level security policy. Similarly, there are prepared three types of security policy drafts corresponding to the respective security policies.

### (1) Executive-level security policy

An executive-level security policy consists of descriptions of the organization's "concept" and "policy" concerning security.

An executive-level policy includes the following items.

### Access Control

An owner of information assets must manage and control the right to access information assets. In order to implement control of the access right, an access control mechanism of a control system used for preserving or processing information assets must be used. Item "access control" describes the organization's concept and policy concerning control of the access right.

### Accuracy of Information

Sustaining information contents is of extreme importance, because information is indispensable for making business decisions. Item "accuracy of information" describes the organization's concept and policy concerning the accuracy of information content.

### Guarantee

An organization must employ appropriate measures to ensure suitable safety of information resources or security. Item "guarantee" describes the organization's concept and policy concerning measures to ensure safety.

### Accountability

All systems must enable recording and analysis of user activities, and an individual user must have responsibility for his own acts. Item "accountability" describes the organization's concept and policy concerning personal responsibility of an individual user.

### Emergency Response Plan

An organization must prepare a detailed plan and procedures for ensuring appropriate response to interference in a system and a network. Item "emergency response plan" describes the organization's concept and policy concerning a plan and procedures for response to an emergency.

### Awareness of Security

Top executives and other employees must become conscious of requirements for the organization's information security, as well as of their personal responsibility. Item "awareness of security" describes the organization's concept and policy concerning personal responsibility.

### Categorization of Information

Information security is for protecting information assets. For this reason, information assets which are objects of protection must be categorized and appropriately protected according to categories. Item "categorization of information" describes the organization's concept and policy concerning information assets.

### Vocational Ethics

A user must handle information ethically. In the event a user handles information is an unethical manner, the user will be subjected to sanction. In short, the user must be conscious that he may be subjected to sanction. Item "vocational ethics" describes the organization's concept and policy concerning vocational ethics of a user.

### Document Management

All security systems must be appropriately recorded in documents. Item "document management" describes the organization's concept and policy concerning documentation.

### Investigation

In the event of violation of the security policy, the organization must investigate the violation and document its details. Item "investigation" describes the organization's concept and policy concerning investigation and documentation of violation of the security policy.

### Privacy

Information is to be used on the precondition that the privacy of concerned members is guaranteed. Item "privacy" describes the organization's concept and policy concerning privacy.

### Risk Management

An owner of information must evaluate potential risks and take appropriate measures to control and protect information. Item "risk management" describes the organization's concept and policy concerning evaluation of risks and measures to control and protect information.

### Verification

An organization must periodically verify implementation of security. Item "verification" describes the organization's concept and policy concerning verification of security.

### Asset Assessment

An organization must analyze its information assets. Item "asset assessment" describes the organization's concept and policy concerning assessment of assets.

### (2) Corporate-level Policy

With regard to information assets of an organization, descriptions of the executive-level policy are applied to a corporate-level policy. The corporate-level policy corresponds to descriptions of "operating procedures." The corporate-level policy is applied to each operating unit of the organization. Operating units are formed by means of dividing constituent elements of an information system into groups according to function. For example, a network, a host, and an application are operating units.

The executive-level policy describes the so-called "constitution" (dominant principles)" whereas the corporate-level policy describes "laws" (rules based on the dominant principle).

The corporate-level policy is divided into two levels: i.e., a top-level policy and a sub-level policy.

### Top-Level Policy

A top-level policy is a policy concerning all operating units which constitute the organization. For example, regulations are described for each operating unit.

### Network

Item "network" describes regulations concerning the entire network of the organization.

### Host

Item "host" describes regulations concerning all hosts provided in the organization.

### Application

Item "application" describes regulations concerning all applications employed in the organization.

### Sub-Level Policy

The sub-level policy describes specific policies concerning individual units into which the operating units are further sub-divided. For example, the sub-level policy comprises descriptions pertaining to the following items.

### Software Management

Item "software management" describes regulations with regard to use of software in the organization and management of software licenses.

### Dial-Up

Item "dial-up" describes regulations with regard to individual remote access servers employed in the organization.

### Electronic Mail

Item "electronic mail" describes regulations with regard to individual E-mails accounts and messages in the organization.

### Firewall Management

Item "firewall management" describes regulations with regard to management of individual firewalls used in the organization.

### Cryptography

Item "cryptography" describes regulations with regard to implementation of individual cryptographic tools used in an organization.

### Electronic Commerce

Item "electronic commerce" describes regulations with regard to electronic transactions used in the organization.

### Network

Item "network" describes regulations with regard to implementation individual networks employed in the organization.

### Host

Item "host" describes regulations with regard to implementation of individual hosts used in the organization.

### Application

Item "application" describes regulations with regard to individual applications used in the organization.

A top-level corporate-level policy is prepared on the basis of information (information derived from answers) collected from the chief information officer and managerial member through interviews. Preparation of a top-level corporate-level policy does not involve conduct of an interview with the director of a system. Here, a director of a system is a member who manages network segments, hosts, or application systems.

The sub-level corporate-level policy involves the results of an interview conducted with a system administrator. To this end, a system-level interview must be conducted. The system-level interview is an interview by which inquiries about individual operating units are submitted to a system administrator.

### (3) Product-level Policy

A product-level policy describes specific "methods" to be used for protecting information assets and the nature of resources (security products and operating systems) and settings thereof. The executive-level policy describes a policy and management rules, whereas the product-level policy refers to details of hardware and software. On the basis of the "principles" provided by the executive-level policy and the "specifications" provided by the corporate-level policy, there is provided a specific "method" for embodying protection of information assets . Hence, the product-level policy includes descriptions regarding implementation of specific technology.

The product-level policy includes descriptions about software and hardware, as well as specific rules for operating software and hardware.

The product-level policy in nature receives little respect from members. For reasons of actual job performance, there may be a case where products to be used are changed, or a case where alternate equipment is used for reasons of equipment failure . Liability for such circumstances or product standards is left to the "principles" stipulated in the executive-level policy or to the "regulations" stipulated in the corporate-level policy. In other words, the executive-level policy or the corporate-level policy must sufficiently specify measures against these circumstances.

So to speak, the previously-described executive-level policy states the principle; for example, a rule about a necessity for revoking an access right after completion of a job requiring the access right.

The corporate-level policy states specific rules; for example, a rule about a necessity for controlling access by means of an operating system.

In contrast, the product-level policy stipulates specific means; for example, a stipulation stating that "Administrator X controls an access to server A. A member who requires access to server A for business must request administrator X to issue an access right. After completion of the job, the member immediately requests administrator X to revoke the access right."

In the present embodiment, there are two product-level policies.

A first-level product policy is described in natural language, as are the executive-level policy and the corporate-level policy. The foregoing examples belong to the first-level product-level policy.

A second-level product policy is a script file stating settings of specific systems. More specifically, the second-level product policy describes a setting script file of an individual system (including both hardware and software). Therefore, the second-level product policy can be used for setting a system, in its present form. In the present embodiment, a specific script file of an individual system is prepared as a product-level policy. Accordingly, there are yielded an advantage of alleviating labor required for actually setting firewalls or routers.

### C. Step 3 : System, and Actual Inspection and Analysis of Operation of the System

In this step, there is examined and analyzed a difference existing between the thus-prepared security policy draft, realities of an information system, and a method of operating the information system. Analysis is performed for indicating proposed countermeasures and priority thereof, as well as for finding a difference.

Inspection and analysis to be performed in this step are made up of the following two levels.

### C-1 Level-1 Actual Inspection and Analysis

A security policy draft is prepared on the basis of inquiries and answers thereto. In this process, variations or contradiction between answers may arise. Moreover, answers are not necessarily correct.

For these reasons, the following operations are performed during level-1 inspection and analysis.

First, answers are examined as to whether or not contradiction arises among a plurality of answers. Further, there is performed a comparison between the security policy draft and an information system depicted from answers acquired by means of interviews. A comparison is made between the security policy draft and the actual information system which has been verified through inspection, thereby detecting a difference.

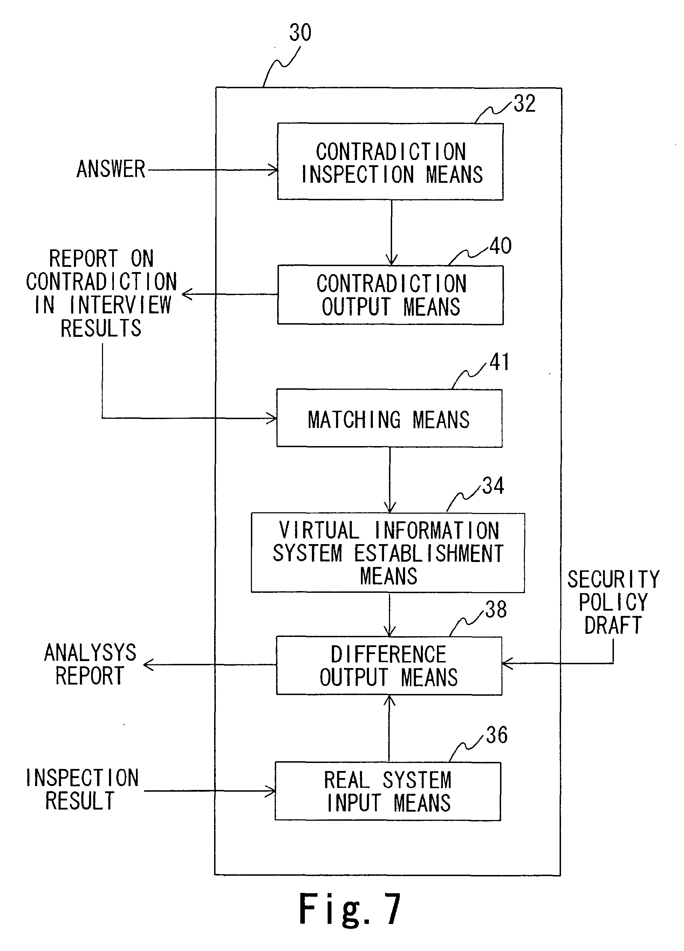

An information system is actually inspected through use of an analyzer, which is an expert system. FIG. 7 is a block diagram showing the configuration of an analyzer 30. As can be seen from the drawing, the analyzer 30 has contradiction inspection means 32 for inspecting whether or not contradiction arises in a group of answers. An inspection result is supplied to contradiction output means 40.

The contradiction output means 40 outputs the inspection result to the outside in the form of an interview result contradiction report.

Contents of the interview result contradiction report are supplied to matching means 41. In a case where a contradiction between answers is found, the matching means 41 performs the operation that the user selects from the two operations provided below.
(1) On the basis of job specifications of the members, the most probable answer is adopted by utilization of a knowledge-based expert system.
(2) An interview is conducted again with regard to a contradiction, or realities of the information system are actually investigated. Alternatively, both conduct of a re-interview and actual inspection of an information system are desirably performed.

Matched results (i.e., answers obtained as a result) of the interview are supplied to a virtual information system establishment means 34.

On the basis of a group of matched answers, the virtual information system establishment means 34 virtually establishes an information system for the organization. The configuration and operation of the information system established by the virtual information system establishment means 34 are supplied to difference output means 38.

The analyzer 30 has real system input means 36 for entering the configuration and operation of an actual information system of the organization. The configuration and operation of a real system entered by way of the real system input means 38 are supplied to the difference output means 38.

Further, a security policy draft is supplied to the difference output means 38. By means of the foregoing configuration, the difference output means 38 performs the following two comparison operations, thereby detecting and outputting respective differences.
(1) Analysis of a difference between a security policy draft and the result of an interview.
(2) Analysis of a difference between a security policy and an interview result which has been verified by means of actual inspection.

Through analysis of a difference stated in (1), a security policy draft is compared with the information system established by the virtual information system establishment means 34. Both the security policy draft and the information system are prepared on the basis of results (answers obtained as a result) of interviews conducted with the members. Therefore, it is thought that no substantial difference is found as a result of comparison. Here, minimum requirements for drafting a security policy must be provided.

For example, in a case where answers to interviews state that "a password is unlimitedly valid," the security policy is not allowed to make a password unlimitedly valid. Expiration of a password is a fundamental requirement of the security policy. A security policy without such a requirement does not merit being called a security policy.

For this reason, a difference exists between a security policy draft and interview results. A detected difference is output as an analysis report.

By means of this analysis report, portions of interview results which are to be amended in terms of security policy can be found.

During analysis of a difference stated in (2), a security policy draft is compared with the established virtual information system which has been verified by means of actual inspection.

As mentioned above, the virtual information system is established on the basis of only interview results. Therefore, so long as the virtual information system which has been verified through use of an actual information system is compared with a security policy draft, points of the actual information system which are to be amended can be ascertained more clearly.

The more accurate an actual inspection conducted for the purpose of verification, the more preferable an inspection result. Investigation of the entire information system consumes much time and effort and makes interviews meaningless.

For these reasons, investigation of an actual information system is performed as a supplement to the answers obtained through the interviews. An efficient way of attaining this is to verify the virtual information system and analyze a difference between the thus-verified information system and the security policy.

For example, emphasizing investigation of a contradiction between answers is preferable. An alternative is emphasizing investigation of an inquiry for which a member (i.e., interviewee) could not answer due to forgetfulness.

The extent to which an investigation is to be performed should be determined on the basis of a required accuracy, time limit, and costs. The thus-determined difference is output as an analysis report.

Either comparison (1) or (2) or both may be performed. Preferably, if an insufficient result is obtained as a result of implementation of comparison (1), comparison (2) is performed.

Preferably, higher-priority portions are subjected to actual inspection, in consideration of the priority determined as a result of level-2 inspection and analysis to be described later.

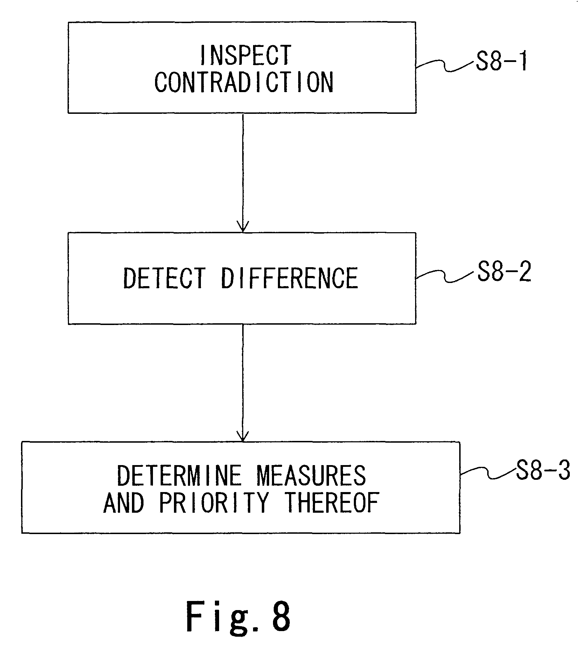

FIG. 8 shows a flowchart representing processing pertaining to step 3. The flowchart shows in more detail processing pertaining to step S1-3 shown in FIG. 1.

In step S8-1, an inspection is performed as to whether or not answers include only contradiction, through use of the contradiction inspection means 32. In step S8-2, an inspection is performed as to whether or not a difference exists between a security policy draft and interview results, through use of the difference output means 38. Here, the interview results comprise a virtual information system established on the basis of answers to interviews and the virtual information system which has been verified by means of actual inspection of a real information system.

No specific sequence exists between processing pertaining to step S8-1 and processing pertaining to step S8-2; processing pertaining to step S8-2 may be performed first.

As mentioned above, according to the present embodiment, since the analyzer 30 shown in FIG. 7 is employed, the user can immediately become aware of whether or not answers include a contradiction or whether or not a difference exists between answers and a real information system.

Here, the analyzer 30 is a so-called expert system. Further, the previously-described means are preferably implemented by software which runs on a computer.

### C-2 Level-2 Actual Inspection and Analysis

Through level-2 actual inspection and analysis, a difference obtained in level-1 actual inspection and analysis is classified into one of three categories; that is, a difference in member assignment, a difference in operating method, and a difference in technical measures. For each of the three types of difference, countermeasures and priority are analyzed.

Example measures for a case where a difference in network policies and the priority of the measures will be described.

### (1) Difference 1

Type of Difference: Difference in personnel assignment

Details: The network policy states that an administrator of each network segment is to be clearly designated. However, network segment administrators are not clearly designated in a real information system.

Measures: Administrators or owners are clearly allocated to respective network segments.

### Priority: Immediately

### (2) Difference 2

Type of Difference: Difference in technical measures

Details: The network policy states that if a password to be used for user authentication in a network has not been used for a long period of time, the password should be deleted. However, the real information system has no system for deleting such a password.

Measures: Establish a system for deleting a password assigned to a user account which has not been used for 30 days.

### Priority: High

In the flowchart shown in FIG. 8, step S8-3 corresponds to an operation for determining measures and the priority thereof.

As mentioned above, the present embodiment facilitates devising of measures for eliminating a difference between answers given in interviews and the real information system. Accordingly, a discrepancy between a security policy and the real information system is easily eliminated.

### D Step 4 : Adjustment of Policy and Rules

In step 3, the discrepancy between the real information system and the security policy draft is clarified, and measures for eliminating the discrepancy and the priority of the measures are also made clear. In step 4, measures and actual work are examined.

Measures are roughly classified into two categories.
(1) Adjust the security policy draft so as to match the real information system.
(2) Adjust operation rules of the real information system.

These measures will now be described in detail.

### D-1 Adjustment of Security Policy Draft

As has been described, the security policy draft is called a set of global guidelines. The security policy draft is prepared by means of appropriate combination of basic items and contents for establishing a standard security policy. Several types of global guidelines have already been known. In the present embodiment, rules and policies are extracted from the global guidelines, as required, and a security policy is drafted by use of the thus-extracted rules and polices in combination. In the drafting phase, the most rigorous global guideline is selected from several types of global guideline, and the thus-selected guideline is taken into a security policy draft.

Thus, in terms of severity of a rule, global guide lines differ from each other according to type. For example, a certain global guide line defines a password as being valid for 60 days, whereas another global guideline defines a password as being valid 180 days.

In the drafting phase, individual rules are defined so as to comply with the most rigorous requirements. Some of organizations may consider that rules of a security policy draft are unacceptably rigorous. In such a case, the rules are preferably changed to less rigorous rules.

In a case where a rule for defining a single password as being valid for 60 days is considered to be unacceptably rigorous, the duration of validation of a password is changed to 180 days after discussions with the organization. Thus, a rigorous rule is changed to a less rigorous rule.

In this way, so long as the severity of each rule is changed in consideration of the organization's intent, a security policy matching a real information system can be established.

A security policy draft is adjusted in the manner as mentioned above.

### D-2 Adjustment of Rules

On the basis of the measures described in connection with level-2 inspection and analysis, operation rules of the real information system are adjusted. Adjustment of rules means modifications to an operating method and modifications to rule settings of a security system (e.g., a firewall).

### E Step 5: Priority Planning

Establishment of a security policy for the real information system of an organization is completed by step 4.

Security measures must be sequentially performed in accordance with the thus-established security policy. In step 5, measures are examined in consideration of priority and are described in a list. Preparation of such a list enables planning of future security measures, and a budget can also be examined on the basis of the plan. Without such a list, forecasting costs for future information security would be difficult, thus imposing difficulty in drawing up a budget.

Security measures include training for compelling members to respect a security policy and analysis of system logs as well as introduction and testing of a security system.

A security policy includes monitoring of a network, auditing of operations on the basis of a security policy, and review of a security policy.

There may be a case where a security policy must be modified in accordance with a change in the organization's information system or a change in the operation of an information system. For this reason, the security policy must be reviewed periodically.

### F Step 6: Implementation of Security Enhancement Measures

On the basis of the security measures list which has been prepared in step 5 in consideration of priority, security enhancement measures are actually implemented. Security enhancement measures can be smoothly implemented in accordance with the list and the security policy.

In the present embodiment, processing from establishment of a security policy to maintenance thereof is performed in six steps. Therefore, a security policy can be established and implemented stepwise and can be implemented in consideration of organization's desires.

As has been described above, according to the present invention, inquiries are submitted to members of an organization, and a security policy is established on the basis of the resultant answers. Accordingly, a security policy can be established easily.

Further, a security policy is established stepwise, and hence flexible establishment of a security policy can be implemented while taking into consideration the organization's desires (e.g., a budget or the like).

According to the present invention, the state of information security of an organization is diagnosed, so that the organization can become aware of the importance of information security.

Since security measures can be provided together with the priority thereof, planning of measures for future information security becomes easy. Moreover, the organization can discuss a budget on the basis of the plan.

There are provided a method of efficiently establishing a security policy and an apparatus for supporting establishment of a security policy. According to a method of establishing a security policy in six steps, a simple security policy draft is first prepared. The security policy draft is adjusted so as to match realities of an organization, as required, thus completing a security policy stepwise. Therefore, a security policy can be established in consideration of a schedule or budget of the organization.

## Claims

1. A method of establishing a security policy for a predetermined organization, the method comprising:
a draft preparation step of preparing a security policy draft;
an analysis step of examining a difference between the security policy draft and realities of the organization; and
an adjustment step of adjusting the security policy draft on the basis of the difference or adjusting operation rules of an actual information system belonging to the organization on the basis of the difference.

2. The method of establishing a security policy according to claim 1, wherein the draft preparation step comprises:
a preparation step of preparing inquiries to be submitted to members of an organization;
an inquiry step of submitting the prepared inquiries to the members;
an answer acquisition step of acquiring from the members answers to the inquiries; and
a drafting step of preparing a security policy draft on the basis of the answers.

3. The method of establishing a security policy according to claim 2, wherein the preparation step involves preparation of inquiries on the basis of job specifications of members to be inquired.

4. The method of establishing a security policy according to claim 2, wherein the answer acquisition step includes at least one of the steps of:
integrating the answers acquired from a single member from among the acquired answers and storing the integrated answers into storage means as answers of a single member to be inquired;
re-submitting inquiries to members if contradictory answers are included in the answers, to thereby resolve contradiction, and storing the answers into the storage means; and
assigning weights to answers according to job specifications of the members to be inquired if contradictory answers are included in the answers, to thereby determine answers and store the answers into the storage means.

5. The method of establishing a security policy according to claim 2, wherein the analysis step comprises at least one of:
a contradiction inspection step of inspecting whether or not contradictory answers are included in the answers;
a first difference detection step of inspecting a difference between an information system virtually designed on the basis of the answers and the security policy, by means of comparison; and
a second difference detection step of verifying the virtually-designed information system by means of examination of a real information system and inspecting a difference between the verified information system and the security policy draft by means of comparison.

6. The method of establishing a security policy according to claim 5, further comprising a measurement step of devising measures addressing the inspected difference in conjunction with the priority of the measures.

7. The method of establishing a security policy according to claim 1, further comprising a diagnosis step of diagnosing the security state of the organization, wherein a result of diagnosis performed in the diagnosis step is submitted to the organization, wherewith the organization can become conscious of a necessity for a security policy.

8. The method of establishing a security policy according to claim 6, further comprising:
a priority planning step of planning, in sequence of priority, implementation of the security measures which have been devised with priority, thereby embodying a budget of the organization.

9. The method of establishing a security policy according to claim 8, wherein the security measures comprise
introduction and testing of a security system;
training for compelling employees to respect a security policy;
analysis of system logs;
monitoring of a network;
auditing operations on the basis of the security policy; and
reviewing the security policy.

10. The method of establishing a security policy according to claim 8, further comprising:
a security enhancement measures implementation step of implementing the security measures in accordance with the plan.

11. A method of establishing a security policy comprising:
a preparation step of preparing inquiries to be submitted to members of an organization;
an inquiry step of submitting the prepared inquiries to the members;
an answer acquisition step of acquiring from the members answers to the inquiries; and
an establishment step of establishing a security policy on the basis of the answers.

12. The method of establishing a security policy according to claim 11, wherein the preparation step involves preparation of inquiries on the basis of job specifications of members to be inquired.

13. The method of establishing a security policy according to claim 11, wherein the answer acquisition step includes at least one of the steps of:
integrating the answers acquired from a single member from among the acquired answers and storing the integrated answers into storage means as answers of a single member to be inquired;
re-submitting inquiries to members if contradictory answers are included in the answers, to thereby resolve contradiction, and storing the answers into the storage means; and
assigning weights to answers according to job specifications of the members to be inquired if contradictory answers are included in the answers, to thereby determine answers and store the answers into the storage means.

14. The method of establishing a security policy according to claim 11, wherein the establishment step involves establishment of three types of security policies: namely,
an executive-level security policy which describes the organization's concept and policy concerning information security, in conformity with global guidelines;
a corporate-level security policy which describes an information security system embodying the executive-level security policy; and
a product-level security policy which describes measures to implement the executive-level security policy with reference to the corporate-level security policy.

15. The method of establishing a security policy according to claim 14, wherein the corporate-level security policy includes two types of corporate-level security policies; namely,
a top-level security policy describing standards for the information security system of the overall organization; and
a sub-level security policy describing standards for individual units constituting the information security system of the organization.

16. The method of establishing a security policy according to claim 14, wherein the product-level security policy includes two types of product-level policies; namely,
a first-level security policy described in natural language; and
a second-level security policy describing settings of individual devices constituting the information security system.

17. The method of establishing a security policy according to claim 11, further comprising an analysis step of examining a difference between the security policy draft and realities of the organization;
the analysis step further comprising at least one of
a contradiction inspection step of inspecting whether or not contradictory answers are included in the answers;
a first difference detection step of inspecting a difference between the security policy and an information system virtually designed on the basis of the answers, by means of comparison; and
a second difference detection step of verifying the virtually-designed information system by means of examination of a real information system and inspecting a difference between the verified information system and the security policy draft, by means of comparison.

18. The method of establishing a security policy according to claim 17, further comprising a measurement step of devising measures to the inspected difference, in conjunction with the priority of the measures.

19. An apparatus of establishing a security policy comprising:
inquiry preparation means for preparing inquiries to be submitted to members of an organization;
storage means for storing answers to the inquiries;
answer archival storage means for acquiring from the members the answers to the inquiries and storing the answers into the storage means; and
establishment means for establishing a security policy on the basis of the answers stored in the storage means.

20. The apparatus for establishing a security policy according to claim 19, wherein the inquiry preparation means prepares inquiries to be submitted to the members to be inquired, on the basis of job specifications of the members to be inquired.

21. The apparatus for establishing a security policy according to claim 19, wherein the answer archival storage means
integrates the answers acquired from a single member from among the acquired answers and stores the integrated answers into the storage means as answers of a single member to be inquired; or
re-submits inquiries to members if contradictory answers are included in the answers, to thereby resolve contradiction, and stores the answers into the storage means; or
assigns weights to answers according to job specifications of the members to be inquired if contradictory answers are included in the answers, to thereby determine answers and stores the answers into the storage means.

22. The apparatus for establishing a security policy according to claim 19, wherein the establishment means establishes three types of security policies: namely,
an executive-level security policy which describes the organization's concept and policy concerning information security, in conformity with global guidelines;
a corporate-level security policy which describes an information security system embodying the executive-level security policy; and
a product-level security policy which describes measures to implement the executive-level security policy with reference to the corporate-level security policy.

23. The apparatus for establishing a security policy according to claim 22, wherein the corporate-level security policy includes two types of corporate-level security policies; namely,
a top-level security policy describing standards for the information security system of the overall organization; and
a sub-level security policy describing standards for individual units constituting the information security system of the organization.

24. The apparatus for establishing a security policy according to claim 22, wherein the product-level security policy includes two types of product-level policies; namely,
a first-level security policy described in natural language; and
a second-level security policy describing settings of individual devices constituting the information security system.

25. A method of assessing the state of security of an organization, the method comprising:
an inquiry preparation step of preparing inquiries to be submitted to members of an organization;
an inquiry step of submitting the prepared inquiries to the members;
an answer acquisition step of acquiring from the members answers to the inquiries; and
a security state assessment step of assessing the state of security on the basis of the answers.

26. The method of assessing the state of security of an organization according to claim 25, wherein the inquiry preparation step involves preparation of inquiries on the basis of job specifications of members to be inquired.

27. The method of assessing the state of security of an organization according to claim 25, wherein the answer acquisition step involves integration of previous answers and acquired answers in a case where the answers are provided by an member to be inquired who has provided answers before, and involves storage of the integrated answers into storage means as answers from a single member to be inquired.

28. The method of assessing the state of security of an organization according to claim 25, wherein the assessment of a security state includes
assessment of security of the organization;
assessment of security of the other organizations included in an industry to which the organization pertains; and
the highest security assessment which is considered to be attainable by organizations in the industry to which the organization pertains.

29. The method of assessing the state of security of an organization according to claim 25, wherein the assessment of a security state includes scores assigned to the following items; namely,
understanding and attitude concerning security;
a security system of the organization;
response to unexpected accidents;
preparation of a budget for security; and
measures to improve security.

30. An apparatus of assessing the state of security of an organization, the apparatus comprising:
preparation means of preparing inquiries to be submitted to members of the organization;
storage means for storing answers to the inquiries;
answer archival storage means of acquiring from the members the answers to the inquiries and storing the answers into the storage means; and
security effectiveness preparation means for preparing a security effectiveness report representing the degree of completeness of security, on the basis of the answers stored in the storage means.

31. The apparatus for assessing the state of security of an organization according to claim 30, wherein the preparation means prepares inquiries to be submitted to the members to be inquired, on the basis of job specifications of the members to be inquired.

32. The apparatus for assessing the state of security of an organization according to claim 30, wherein the answer archival storage means integrates previous answers and acquired answers in a case where the answers are provided by a member to be inquired who has provided answers before, and stores the integrated answers into the storage means as answers from a single member to be inquired.

33. The apparatus for assessing the state of security of an organization according to claim 30, wherein the security effectiveness report includes
the degree of completeness of the organizations security;
the degree of completeness of security of other organizations included in an industry to which the organization pertains; and
the highest degree of completeness of security which is considered to be attainable by organizations in the industry to which the organization pertains.

34. The apparatus for assessing the state of security of an organization according to claim 30, wherein the security effectiveness report includes scores assigned to the following items; namely,
understanding and attitude concerning security;
a security system of the organization;
response to unexpected accidents;
preparation of a budget for security; and
measures to improve security.

35. An analyzer for analyzing a difference between a security policy and an information system of an organization, comprising
contradiction inspection means for inspecting whether or not contradiction exists between individual answers in response to inquiries submitted to members of the organization; and
contradiction output means for outputting information about the inspected contradiction.

36. The analyzer for analyzing a difference between a security policy and an information system of an organization according to claim 35, further comprising:
matching means for matching the answers by means of elimination of contradiction on the basis of the information about contradiction, thus producing answers free of contradiction;
establishment means for virtually establishing an information system for the organization on the basis of the answers produced by the matching means; and
difference output means for outputting a difference between the configuration of the virtually-established information system and a security policy, by means of comparison.

37. The analyzer for analyzing a difference between a security policy and an information system of an organization according to claim 36, further comprising:
real system input means for examining the information system of the organization and entering the configuration of the information system; and
difference output means which verifies the virtually-established information system by reference to the configuration of the information system and outputs a difference between a security policy and the configuration of the virtually-established information system which has been verified, by means of comparison.
